# EUROPÄISCHE PATENTANMELDUNG

(11) **EP 2 383 117 A1**
(43) Veröffentlichungstag der Anmeldung: **02.11.2011**
(21) Anmeldenummer: 10015373.3
(22) Anmeldetag: 07.12.2010
(51) Int. Cl.: B32B 37/22, B32B 38/18

(54) **Verfahren und Vorrichtung zum Beschichten eines bogenförmigen Trägermaterials**

(30) Priorität: 27.04.2010 CH 6152010
(71) Anmelder: Steinemann Technology AG, 9015 St. Gallen (CH)
(72) Erfinder: Walther, Thomas, 9000 St. Gallen (CH)
(74) Vertreter: Arat, Dogan

(57) **Zusammenfassung**

Bei einer Vorrichtung zur Bearbeitung eines Laminats, bestehend aus einem bogenförmigen Trägermaterial und einem bahnförmigen Beschichtungsmaterial, wobei das Beschichtungsmaterial ein Druckbild und/oder Textinformationen aufweist,
- mit einer Walzen (2,3), die einen Kaschierspalt bilden,
- mit einer Ausrichtstation für das bogenförmige Trägermaterial
- mit einer Sensoreinrichtung (7) für das bahnförmige Beschichtungsmaterial, welche geeignet ist Druckmarken und/oder Bildbestandteile auf dem bahnförmigen Beschichtungsmaterial als Informationen zu erfassen, soll
- die Ausrichtstation eine Vorschubmittel (10) umfassen, welche geeignet ist das bogenförmige Trägermaterial hin zu den Walzen (2,3) zu bewegen,
- die Ausrichtstation einen Vorderkantenanschlag (8) umfassen, welche geeignet ist die zu den Walzen (2,3) weisende Kante des bogenförmigen Trägermaterials in Ruhelage formschlüssig anlaufen zu lassen, damit eine Gesamtausrichtung des Trägermaterials stattfindet,
- wobei der Vorderkantenanschlag (8) durch Ansteuerung aus einer in Ruhelage im Wesentlichen horizontal zu einem Untergrund angeordneten Position in eine in Arbeitslage um einen Drehpunkt (30) hin zu dem Untergrund hin schwenkbare Position bringbar ist,
- wobei ein Rechner (21), welcher die Informationen der Sensoreinrichtung (7) erfasst und den Vorderkantenanschlag (8) aus einer Ruhelage in eine Arbeitslage schwenkbar ansteuert, geeignet um eine Synchronität zwischen dem bahnförmigen Beschichtungsmaterial und dem bogenförmigen Trägermaterial für die gemeinsame Einbringung in den Kaschierspalt zu erreichen.

## Beschreibung

Die Erfindung betrifft eine Vorrichtung zum Beschichten eines bogenförmigen Trägermaterials mit einem bahnförmigen Beschichtungsmaterial.

### Stand der Technik

Die Erfindung ist eine Weiterentwicklung bekannter Laminiermaschinen für die Lamination von Kunststoffolien auf bogenförmigen Trägermaterialien. Ein gattungsgemässer Vertreter einer solchen Laminiermaschine ist in der EP 0 586 642 B1 zu finden.

Derartige Laminiermaschinen zeichnen sich dadurch aus, dass eine relative dünne Folie von einer Rolle endlos abgenommen wird und in einem Kaschierwerk mit dem bogenförmigen Trägermaterial zu einer Laminatbahn verbunden wird. Diese Laminatbahn wird anschliessend durch eine Trenneinrichtung wieder in einzelne Laminatbogen aufgetrennt. Das Trägermaterial wird von einer Bogentrennvorrichtung von einem Stapel abgenommen und dem Kaschierwerk in einem Schuppenstrom oder Stoss an Stoss zugeführt.

Aus der EP 0 586 642 B1 ist ferner bekannt, dass für die Herstellung einer Bogenfolge von Einzelbogen auf einem Bogenzuführband für den Verarbeitungsprozess zum Beispiel in einer Kaschier- oder Lackieranlage, das effektive Verarbeitungstempo festgestellt und über Rechnermittel die Sequenz der Anlegerleistung ermittelt und die Bogenfolge über gesteuerte mechanische Mittel erzeugt wird, [siehe EP 0 586 642 B1, Seite 4, Spalte 6, Zeile 1-8] Dadurch lässt sich zum Beispiel der Grad der Unter- oder Überschuppung eines Schuppenstroms auf einem Transporttisch einstellen.

Ferner ist bekannt, dass Laminiermaschinen eine Ausrichtstation aufweisen, in der der Bogen an seiner Vorderkante an Vorderkanten (Anschlagmittel für die Bogenvorderkante) und gegebenenfalls seitlich durch eine Seitenziehmarke ausgerichtet wird. Hier zeigt die EP 0 586 642 B1 ebenfalls, dass die Vordermarken prozessgesteuert antreibbar sind. Die Ausrichtstation weist dabei Antriebmittel auf, sowohl anlegerseitig wie verarbeitungsprozessseitig steuerbar sind. Die Ausrichtstation weist eine Beschleunigerwalze sowie Steuermittel für den Antrieb der Beschleunigerwalze auf. Den Beschleunigerwalzen werden dabei ein- und ausrückbare Führungsrollen sowie ein steuerbarer Anschlag zugeordnet, wobei die Ein- und Ausrückung der und der Anschlag vorzugsweise mit den Antriebsmitteln des Anlegers koordiniert steuerbar sind, [siehe EP 586 642 B1, Seite 5, Spalte 8, Zeilen 13-41].

Der Nachteil der bekannten Ausrichtstationen an Laminiermaschinen ist, dass diese unmittelbar der Bogentrennstation, zum Beispiel einem Bogenanleger, zugeordnet sind. Der Schuppenstrom wird dann über Transportbänder der Kaschierstation zugeführt, wobei die Bögen auf dem Transportweg diverse Vorbehandlungen erfahren.. Dies sind üblicherweise Bogenreinigungsstationen, wie Bürstenreinigungswerke und / oder Kalanderwerke) und / oder Vorbehandlungsstationen wie zum Beispiel eine Corona -Anlage zur Erhöhung der Oberflächenspannung.

Ist das Ziel eine sehr exakte Zuführung eines Bogens in das Kaschierwerk, ist eine Laminiermaschine weniger geeignet. Die Transportbänder weisen Toleranzen auf und auch jede Behandlungsstation birgt die Gefahr, dass die Bogenlage leicht verändert wird. So können zum Beispiel die Bürsten einer Bürstenstation bei unterschiedlichen Borstenlängen die Lage des Bogens auf dem Transportband leicht verändern. Es ist zum Beispiel auch bekannt, dass der Bogenlauf durch die Einwirkung einer Corona leicht gebremst wird. Die zuvor in der Ausrichtstation ausgerichteten Stationen können auf dem Weg in das Kaschierwerk an Lagegenauigkeit verlieren.

Eine sehr genaue Ausrichtung ist jedoch erforderlich, wenn ein auf Rollenmaterial befindliches Druckbild passgenau auf einem bogenförmigen Trägermaterial auflaminiert werden soll. Die Vorderkante Druckbilds muss dann in engen Toleranzen mit der Vorderkante des bogenförmigen Trägermaterials synchronisiert werden. Die erforderlichen Lagetoleranzen liegen in einem Bereich von 2/1 Omm und darunter, da ansonsten die Weiterverarbeitung der Druckprodukte (zum Beispiel Schneiden, Stanzen, Falzen etc.) nicht mehr lagegerecht möglich ist. Zu grosse Toleranzen wirken auf den Betrachter störend und das Material wird Ausschuss.

Die WO 2006 - 102858 A2 löst das Problem, indem das Druckbild auf der Rollenbahn und die Kante des Trägermaterials durch einen Sensor erfasst werden und mittels einer Registersteuerung das Druckbild und das Trägermaterial zueinander synchronisiert werden. Diese Lösung ist sehr aufwendig und erfordert eine ständige Nachregelung des Vorschubmittels, die das Trägermaterial in das Kaschierwerk transportieren. Die alternative Möglichkeit die bedruckte Rollenbahn zu regeln scheidet in der Regel aus, da sich aufgrund unterschiedlicher Zugspannungen unterschiedliche Dehnungsfaktoren einstellen können. Ein weiterer Nachteil der Kantenerfassung liegt in der erforderlichen Sensorgenauigkeit. Präzise Sensoren sind sehr teuer und versagen dann (bezogen auf die Genauigkeitsanforderungen), wenn Kanten keine exakte Kante aufweisen oder nach unten durchhängen bzw. sich nach oben aufwölben. Problematisch ist die Erfassung der Trägermaterialkante auch bei sehr stark reflektierenden Materialien, wie zum Beispiel Metalltafeln. In diesem Fall kann die Erfassung durch die Rejektionen gestört werden.

Regelungstechnisch ist eine solche Regelung auch sehr kritisch. Zwei Parameter werden erfasst, die beide Schwankungen unterliegen können. Zum Beispiel kann die Rollenbahn durch schlechte Aufrollung Zonen unterschiedlicher Dehnung aufweisen und das bogenförmige Trägermaterial die üblichen Transportschwankungen. Der Vorschub des bogenförmigen Trägermaterials wird schlimmstenfalls durch zwei variierende Signale zum Zwecke der Synchronisation gesteuert. Dies kann zu Aufschaukeleffekten und instabilen Regelungsverhältnissen führen.

### Aufgabe der Erfindung

Ziel der Erfindung ist es mit einem geringeren Regelaufwand eine sehr gute Synchronisation zwischen einem auf einer Rollenbahn befindlichen Druckbild und einem bogenförmigen Trägermaterial zu erzielen, so dass beide Materialien in einem Kaschierspalt einer Laminiermaschine passgerecht zu einem Laminat verbunden werden.

### Lösung der Aufgabe

Zur Lösung der Aufgabe führt der kennzeichnende Teil von Anspruch 1.

### Darstellung der Erfindung

Die von einem erfindungsgemäss hergestellten und betriebenen Laminiermaschine gebotene Vorteile liegen in erster Linie darin, dass registergenau / passgenau ein auf einer Rollenbahn befindliches Druckbild auf ein bogenförmiges Trägermaterial auflaminiert werden kann, ohne dass auf eine aufwendige, fehleranfällige Sensorik und Regelungstechnik zurückgegriffen werden muss.

Dieser positive Effekt wird erzielt, indem unmittelbar vor dem Kaschierspalt eine Ausrichtstation angeordnet ist, die mindestens einen mechanischen Vorderkantenanschlag aufweist, an dem sich der Bogen an der Vorderkante ausrichtet. Nach erfolgtem Ausrichtvorgang wird das bogenförmige Trägermaterial durch eine Vorschubvorrichtung direkt in den Kaschierspalt geschoben. Jedes bogenförmige Trägermaterial wird somit vor dem Einlauf auf eine vordefinierte Position gebracht.

Dagegen müssen Systeme, die eine oder mehrere Druckmarken oder Bildbestandteile auf der Rollenbahn abtasten und gleichzeitig die Kante des bogenförmigen Trägermaterials abtasten, den Bogentransport des Trägermaterials Einzelbogen bezogen überwachen. Die bogenförmigen Trägermaterialien können sich, wie zuvor schon erwähnt, während des Transports von der Entstapelungsvorrichtung bis zu Kaschierspalt verschieben. Das heisst, die Kante des bogenförmigen Trägermaterials muss vor dem Einlauf in das Kaschierwerk erfasst und auf den einzelnen Bogen bezogen eine Vorschubgeschwindigkeit ermittelt werden, damit eine Synchronisation des Transports des bogenförmigen Trägermaterials mit dem Druckbild auf der Rollenbahn erfolgen kann. Dies bedeutet, dass das bogenförmige Trägermaterial zum Zwecke der Synchronisation beschleunigt bzw. verzögert werden muss. Dies führt bei einer nichts sehr präzisen Transport aufgrund sich gegebenenfalls ständig ändernden Schlupfverhältnissen. Eine Regelung der Rollenbahn schliesst sich in der Regel aus, da variierende Rollenbahngeschwindigkeiten zu unterschiedlichen Dehnverhältnissen führen können Dies ist insbesondere bei bedruckten, oftmals nur 10-12mm dicken Folienbahnen der Fall, wie sie in dieser Anwendung häufig eingesetzt werden.

Dagegen wird in der erfindungsgemässen Lösung jedes bogenförmige Trägermaterial kurz vor dem Kaschier an mindestens einem Vorderkantenanschlag ausgerichtet und somit mechanisch in eine vordefinierte Position gebracht. Von dieser Referenzposition kann jedes bogenförmige Trägermaterial bei einer konstanten Maschinengeschwindigkeit mit einer gleichbleibenden Vorschubgeschwindigkeit in den Kaschierspalt eingebracht werden. Mit dieser erfindungsgemässen Lösung wird der Regelungs- und Steuerungsaufwand deutlich reduziert. Ferner werden Fehlerquellen, die bei Erfassung der Vorderkante des bogenförmigen Trägermaterials störend wirken können, ausgeschlossen. Typische Fehlerquellen sind ungleichmässige Vorderkanten, stark reflektierendes Trägermaterial oder Vibrationen, wie sie bei sehr schweren Trägermaterialien, wie zum Beispiel Metallplatten, auftreten können. Die erfindungsgemäss gefundene Lösung stellt daher ein prozesstechnisch sicheres und kostengünstiges Produktionssystem dar.

### Kurze Beschreibung der Zeichnungen

Bevorzugte Ausführungsformen, die für die Erfindung wesentliche Merkmale aufweist, werden anhand der Zeichnungen beschrieben. Es zeigen dabei die Zeichnungen:
Figur 1: eine vereinfachte schematische Ansicht einer erfindungsgemässen Laminiermaschine, wobei nur der Bereich von einer Entstapelungseinrichtung bis zu einem Kaschierwerk aufgezeigt wird. Eine dem Kaschierwerk nachfolgende Bearbeitungsstationen und Abstapeleinrichtungen wurden vernachlässigt.
Figuren 2A-2D: Detailansichten einer ersten Ausführung einer erfindungsgemässen Ausrichtstation, wobei die einzelnen Abiaufschritte des Ausrichte- und Transportablaufs in Teilzeichnungen dargelegt wird.
Figuren 3A - 3D: Detailansichten einer zweiten Ausführung einer erfindungsgemässen Ausrichtstation, wobei die einzelnen Abiaufschritte des Ausrichte- und Transportablaufs in Teilzeichnungen dargelegt wird.
Figuren 4A-4D: Detailansichten einer dritten Ausführung einer erfindungsgemässen Ausrichtstation, wobei die einzelnen Abiaufschritte des Ausrichte- und Transportablaufs in Teilzeichnungen dargelegt wird.

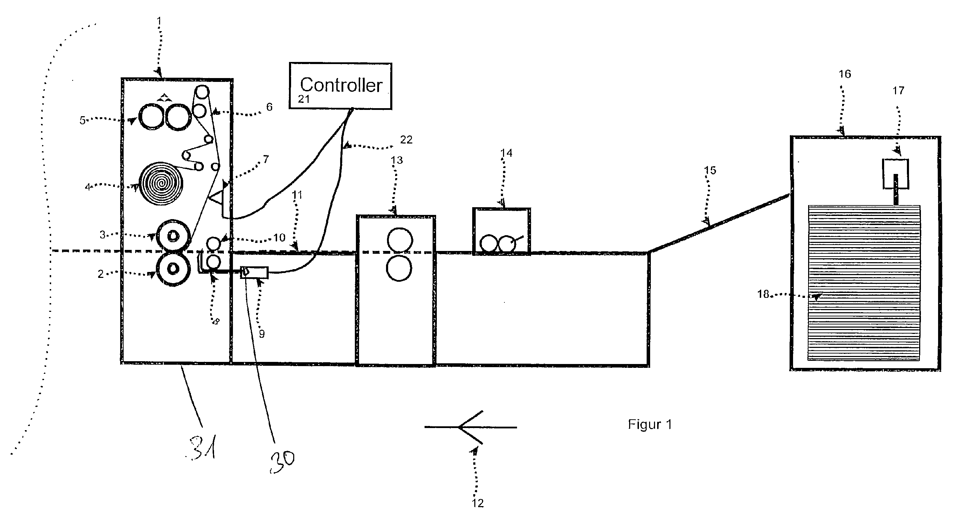

In den beigefügten Zeichnungen handelt es sich bei Figur 1 um eine schematische Ansicht eines Teils der erfindungsgemässen Laminiermaschine. Die bogenförmigen Bedruckstoffe werden in einer Entstapelungseinrichtung (16), zum Beispiel einem Bogenanleger, mit einem Bogentrenner (17) von einem Stapel (18) abgenommen und der Maschine zugeführt. Die bogenförmigen Trägermaterialien liegen dann auf einem Anlegertisch (15) in der Regel in der Form eines Schuppenstroms vor. Der Schuppenstrom wird durch eine Abfolge von bogenförmigen Trägermaterialien gebildet, die partiell unter- oder überlappt sind. Von dem Anlegertisch (15) werden die bogenförmigen Trägermaterialien an eine waagrechte geführte Transporteinrichtung (11) übergeben. Diese Transporteinrichtung (11) kann zum Beispiel durch umlaufende Förderbänder gebildet werden. Die Transporteinrichtung (11) kann eine Differenzgeschwindigkeit gegenüber der Transportgeschwindigkeit des Anlegertischs (15) aufweisen, so dass die Über- bzw. Unterlappung des Schuppenstroms relativ zu der Unter- oder Überlappung auf dem Anlegertisch (15) vergrössert oder verkleinert werden kann. Die Transporteinrichtung (11) kann aus einer Vielzahl von Teilförderstrecken gebildet werden, die zum Beispiel zwischen den einzelnen Aggregaten angeordnet sind. Während des Transports durch die Maschine können die bogenförmigen Trägermaterialien unterschiedliche Bearbeitungen erfahren. In der Schemazeichnung sind dies eine Bürstenreinigungsstation (14) und eine Kalanderstation (13). Ebenfalls häufig eingesetzt wird eine Corona- oder Plasmaanlage zur Steigerung der Oberflächenspannung und Reinigung der Oberfläche der Trägermaterialien, wobei auf die Darstellung einer solchen Anlage hier verzichtet wurde.

Ein Kaschierwerk (1) weist mindestens eine Abrollung (4) auf, in der eine Rollenbahn (6) von einer Vorratsrolle abgerollt wird. Die Rollenbahn (6) wird nach der Abrollung (4) mit einem Kleberauftragswerk (5) mit Klebstoff beschichtet. In der schematischen Zeichnung ist ein Rollenauftragswerk als Kleberauftragswerk (5) dargestellt. Das Kleberauftragswerk (5) kann aber ebenfalls als ein Sprühkleberauftragswerk mit Düsen, als ein Breitschlitzdüsenauftragswerk oder als ein Vorhangauftragswerk ausgeführt sein. Die Art des Kleberauftrags ist nicht erfindungswesentlich. Als Klebstoffe kommen Dispersionsklebstoffe, Ein- oder Zweikomponenten Polyurethan Klebstoffe, Reaktive Schmelzklebstoffe, z.B. auf Polyurethan - Basis oder einfache Schmelzklebstoffe in Frage. Die Art des Klebstoffes ist nicht erfindungswesentlich, jeder für den Anwendungsfall geeignete Klebstoff kann eingesetzt werden.

Die mit dem Klebstoff beschichtete Rollenbahn (6), die mindestens ein Druckbild trägt, wird dann mit einer optischen Sensoreinrichtung (7) abgetastet. Diese Sensoreinrichtung (7) kann auf Druckmarken, zum Beispiel Registermarken, und /oder Teile des Druckbilds abgestimmt sein. Die Sensoreinrichtung (7) kann aus einem oder mehreren, zum Beispiel über die Rollenbreite nebeneinander angeordneten optischen Sensoren bestehen. Eine geeignete optische Sensoreinrichtung (7) könnte zum Beispiel aus Laserabtastköpfen bestehen. Die Sensoreinrichtung (7) kann alternativ oder ergänzend eine oder mehreren Kameras mit einer nachgeschalteten Bildverarbeitung aufweisen, die Teil des Druckbildes oder spezielle Marken auswerten.

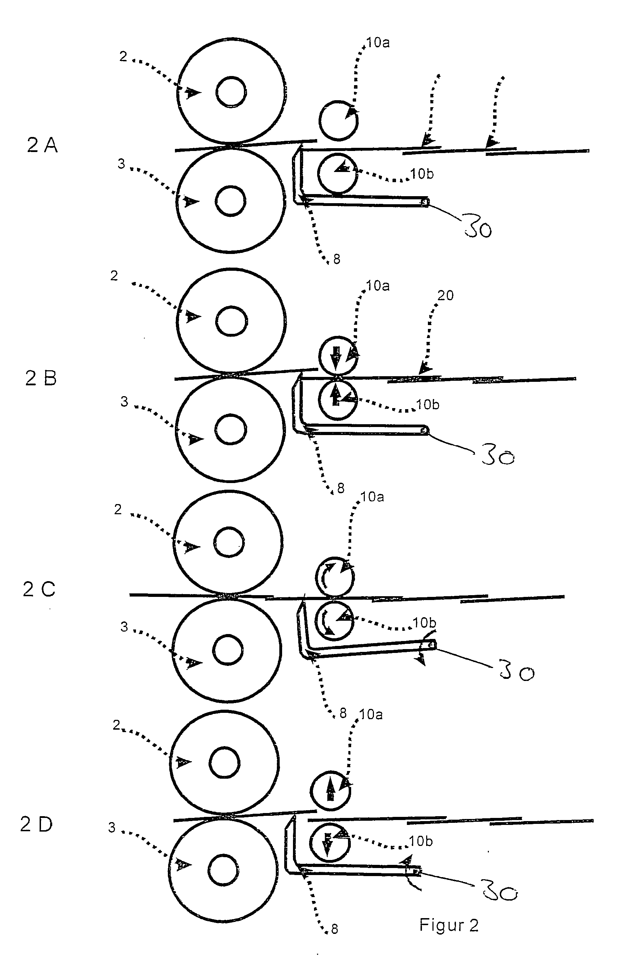

Das Signal der Sensoreinrichtung (7) dient als Triggersignal für die Ansteuerung der Ausrichtstation, die in unmittelbarer Nähe des Kaschierspalts angeordnet ist. Die Ausrichtstation weist mindestens einen versenkbaren, wegschwenkbaren oder in einer anderen geeigneten Form wegbewegbaren Vorderkantenanschlag (8) auf, der zum Zeitpunkt der Ausrichtung so in die Transportebene hereinragt, dass das bogenförmige Trägermaterial sich an der Vorderkante ausrichtet. Die Ausrichtstation kann ebenfalls eine Vorrichtung zum seitlichen Ausrichten aufweisen, indem das bogenförmige Trägermaterial durch eine Ziehmarke gegen einen seitlichen Anschlag gezogen wird oder durch eine Stossrharke mit einem Anschlag auf eine vorbestimmte Position geschoben wird. Die seitliche Ausrichtung kann ebenfalls ergänzend oder alternativ geschehen, indem ein seitlicher Anschlag schräg in die Transportebene hereinragt und das bogenförmige Trägermaterial sich während des Transports an diesem ausrichtet. Die Einrichtungen zur seitlichen Ausrichtung sind zeichnerisch nicht dargestellt. Ferner weist die Ausrichtstation mindestens ein Vorschubmittel (10) auf, die das ausgerichteten Bogen aus dem Ausrichtzustand wieder beschleunigt. Verschiedene Ausführungen eines solchen Vorschubmittels (10) werden in den Figuren 2,3 und 4 dargelegt.

Aus dem Triggersignal der Sensoreinrichtung (7) wird in einem Rechner (21) unter Berücksichtigung mindestens des Parameters Prozessgeschwindigkeit der Öffnungszeitpunkt des Vorderkantenanschlags (8) und die Geschwindigkeit des Vorschubmittels (10) bestimmt. Dies kann anhand einer Berechnungsvorschrift und / oder hinterlegten Kennlinien erfolgen, die alle erforderlichen Parameter berücksichtigen. Das Vorschubmittel (10) weist dabei mindestens einen steuerbaren Antrieb auf.

Nach dem Verlassen der Ausrichtstation erreicht das bogenförmige Trägermaterial den Kaschierspalt, der aus der Kaschierwalze (3) und der Gegendruckwalze (2) gebildet wird. In dem Kaschierspalt wird das bogenförmige Trägermaterial mit der mit Klebstoff beschichteten Rollenbahn (6) unter Einwirkung von Druck und gegebenenfalls Wärme zu einer Laminatbahn verbunden. Diese Laminatbahn wird nach dem Verlassen des Kaschierspaltes durch eine Trenneinrichtung wieder in einzelne Laminatbogen aufgetrennt. Die Trenneinrichtung ist in der Zeichnung nicht dargestellt. Die Trennung kann durch einen Laserschnitt, durch ein rotierendes oder taktendes Messer, ein rotierendes oder taktendes Heisstrennmesser oder durch Reissen geschehen. Die einzelnen Laminatbogen werden dann auf einen Ablagestapel abgestapelt oder einer weiteren Bearbeitungsstation zugeführt.

Figur 2 zeigt eine Ausprägung einer solchen erfindungsgemässen Ausrichtstation. Die Zeichnungen 2A bis 2D zeigen die einzelnen Prozessablaufschritte. Die bogenförmigen Trägermaterialien (20) werden in einem Schuppenstrom der Ausrichtstation zugeführt. Der Schuppenstrom weist eine Unter- oder Überlappung (19) auf. Der Vorderkantenanschlag (8) bzw. die Vorderkantenanschläge (8) sind in dieser Version als eine in die Transportebene einschwenkbare Vorderkantenanschläge (8) dargestellt. Im folgenden wird aus Vereinfachungsgründen immer von einem Vorderkantenanschlag gesprochen, wobei der Vorderkantenanschlag jedoch eine oder mehrere Anschläge umfassen kann. In dem ersten Prozessschritt (2A) ist der Vorderkantenanschlag (8) in die Transportebene eingeschwenkt und der erste Bogen in Transportrichtung vor dem Vorderkantenanschlag (8) richtet sich an diesem aus. Das Vorschubmittel (10) ist hier als zwei korrespondierende Walzen (10a, 10b) ausgeführt, die ober- und unterhalb der Transportebene angeordnet sind. Dies korrespondierenden Walzen können jeweils eine durchgehende Walze, profilierte Walzen, geteilte Walzen oder eine Vielzahl von einzelnen Walzen sein. Diese sind im Prozessschritt eins getrennt und haben höchstens einen leichten Kontakt zu dem Trägermaterial.

In dem Prozessschritt 2 (2B) wird das Vorschubmittel (10) abgesenkt, angeschwenkt oder in einer anderen Art zugestellt, so dass sie einen definierten Kontakt zu dem bogenförmigen Trägermaterial haben, das sich in der Ausrichtstation befindet. Idealerweise erfolgt die Zustellung zu einem Zeitpunkt vor dem Entfernen des Vorderkantenanschlags (8) aus der Transportebene, d.h. das Vorschubmittel setzt auf einem ruhenden Trägermaterial auf und kann annährend schlupffrei einen Presskontakt herstellen. Alternativ kann die Zustellung des Vorschubmittels (10) annährend zeitgleich bzw. zeitgleich mit dem Entfernen des Vorderkantenanschlags (8) aus der Transportebene geschehen. Die Zustellung der beiden korrespondierenden Walzen (10a, 10b) des Vorschubmittels kann durch die Beistellung einer Walze gegen eine feststehende Walze oder durch die Beistellung zweier beweglicher Walzen zueinander geschehen. Die Anpresskraft der Walzen (10a, 10b) ist idealerweise einstellbar. Die Zustellung kann durch einstellbare Federn, pneumatische oder hydraulische Beistellmittel, steuerbare Kurvenscheiben oder elektrische Mittel (Motoren etc.) geschehen.

In dem Prozessschritt 3 (2C) werden der Vorderkantenanschlag (8) aus der Transportebene herausbewegt und dem bogenförmige Trägermaterial wird durch die beigestellten und angetriebenen Vorschubmittel eine Vorschubgeschwindigkeit aufgeprägt. Das vorab ausgerichtete bogenförmige Trägermaterial wird dem Kaschierspalt zugeführt, der aus der Kaschierwalze (2) und der Gegendruckwalze (3) gebildet wird. In dem Kaschierspalt wird das Trägermaterial unter Einwirkung von Druck und gegebenenfalls Wärme unter Zurhilfenahme eines Klebstoffes mit der bedruckten Rollenbahn verbunden.

In dem Prozessschritt 4 (2D) wird der Vorderkantenanschlag (8) wieder in die Transportebene hineinbewegt. Das bogenförmige Trägermaterial wird an den Vorderkantenanschlag (8) herangeführt und das Vorschubmittel (10) übt keinen Druck auf das Trägermaterial aus. In diesem konkreten Fall sind die zwei korrespondierenden Walzen (10a, 10b) des Vorschubmittels getrennt.

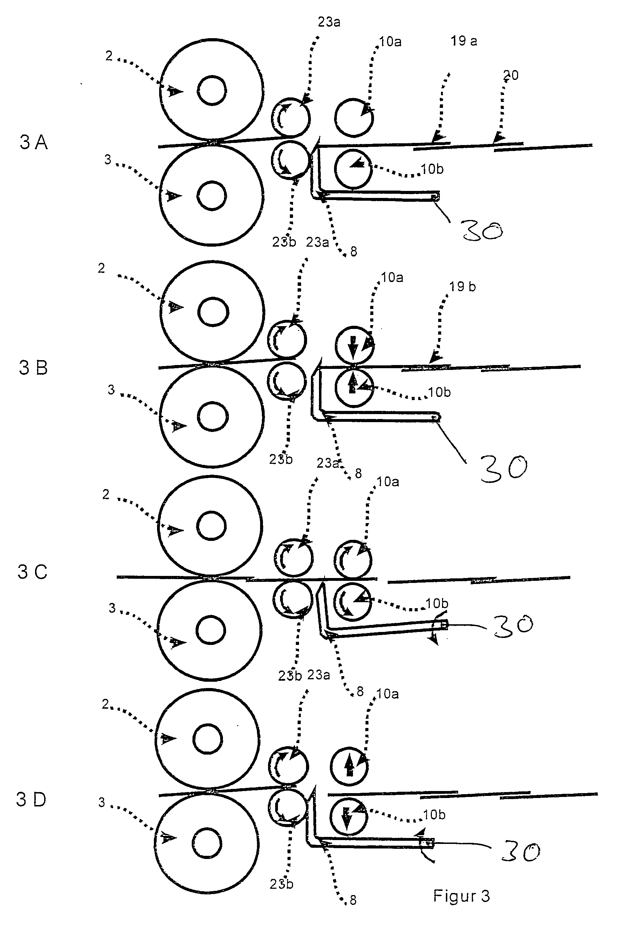

In Figur 3 wird die Ausführung aus Figur 2 mit einem zusätzlichen Vorschubmittel (23) ergänzt, das zwischen der Ausrichtstation und dem Kaschierspalt angeordnet ist. In diesem Fall muss das in Prozesslaufrichtung dem Vorderkantenanschlag (8) vorgeordnete Vorschubmittel nur die Beschleunigung bis zu dem Vorderkantenanschlag (8) nachgeordneten Vorschubmittel übernehmen, das dann den Weitertransport veranlasst. Das in Prozessrichtung erste Vorschubmittel kann dann getrennt werden, so dass mehr Zeit für Ausrichtung und Kraftaufbau zur Verfügung steht.

Vorschubmittel (10,23) in Form von korrespondierenden Walzen können eine beliebige Walzenkombination aus Metall- und elastomerbezogenen Walzen darstellen. Eine oder beide Walzen des Vorschubmittels (10,23) kann / können als Saugwalzen ausgeführt sein mit Öffnungen in der Mantelfläche. In einer besonderen Ausführung für den Transport metallischer Trägermaterialien kann eine Walze als Magnetwalze ausgeführt sein, die eine Magnetkraft auf das Trägermaterial ausübt. Idealerweise ist die Magnetkraft abschaltbar und / oder, umpolbar. Dies kann durch einen Elektromagnetwalze oder einen schaltbaren, z.B. bistabilen Dauermagneten gewährleistet sein.

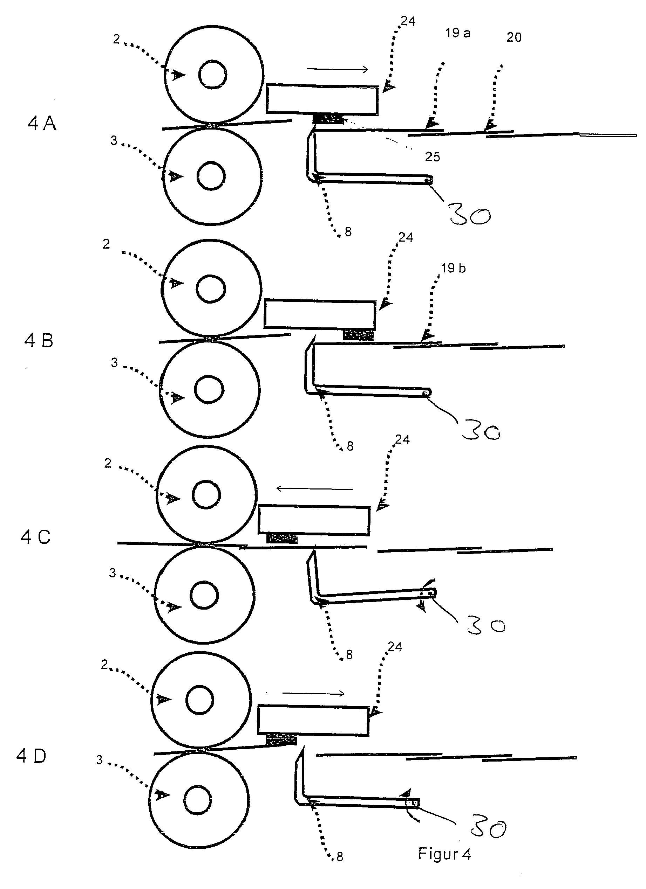

In der Figur 4 wird eine spezielle Ausführung eines Vorschubmittels (24) gezeigt. Das Vorschubmittel (24) besteht aus mindestens einem Linearantrieb oder mit einem Servomotor angetriebenen Riemenantrieb. An dem Vorschubmittel ist ein oder mehrere Sauger, die das Trägermaterial pneumatisch fixieren oder schaltbare Magnete für den Transport von Metalltafeln aufweist. Es können über die Breite mehrere derartige Vorschubmittel angeordnet sein, die auch alternierend arbeiten können. Alternierend bedeutet, dass eine Gruppe von Vorschubmitteln den Transport des Trägermaterials vornimmt, während eine andere Gruppe von Vorschubmitteln gerade wieder in Richtung Ausrichtstation zurückläuft um den nächsten Bogen aufzunehmen. Die Aufnahme des Trägermaterials erfolgt dabei, wie in Figur 4B gezeigt vor dem Vorderkantenanschlag (8). Mit dem Hubsauger (25) oder Magneten (25) wird das Trägermaterial erfasst und in Richtung Kaschierspalt transportiert (Figur 4C). Danach läuft der Hubsauger (25) oder Magnet (25) wieder zurück.

In einer zweiten Version der Ausführung in Figur 4 (nicht dargestellt) dient der Linear- oder Riemenantrieb nur dazu das Trägermaterial zu beschleunigen. Danach wird es von einem zweiten Vorschubmittel, z.B. einem korrespondierenden Walzenpaar wie in Figur 3 erfasst und von diesem in Richtung Kaschierspalt transportiert. Diese Art von Antriebe haben den Vorteil, dass sie einen sehr exakten und vordefinierbaren Trägermaterialtransport erlauben. Diese Art des Vorschubmittels kann, wie in Figur 4 gezeigt oberhalb der Transportebene und / oder unterhalb der Transportebene angeordnet sein.

Die Rollenbahn besteht in vorteilhafter Weise aus einem transparenten mit mindestens einer Bild- oder Textinformation bedruckten Folienmaterial. Das Druckbild wiederholt sich in festen Rapportabständen mit geringen Abweichungen, kann aber durchaus sich verändernde Inhalte aufweisen. Dies kann erreicht werden, indem die Folie in einem Digitaldruckverfahren, z.B. Toner- oder Inkjetdruck bedruckt wird. Alternativ kann die Folie auch in einem Druckverfahren wie dem Offsetdruck, Tief- oder Flexodruck mit einem statischen Inhalt bedruckt werden. Auch ist eine Kombination eines im Flexo-, Offset- oder Tiefdruck gedruckten Bildes mit einem Digitaldruckverfahren gedruckten Inhalt denkbar. Das Druckbild befindet sich idealerweise auf der Seite der Folienbahn, die in dem Kaschierspalt später gegen das bogenförmige Trägermaterial kaschiert wird. Die transparente Folie dient dann als Schutz und Veredelung des Druckbildes. Als Folienmaterial sind alle gängigen Folientypen denkbar. Besonders geeignet ist Polyester, BOPP und andere dehnungsarme Kunststoffe. Die Folienbahn kann aber auch eine nicht transparentes Material sein, z.B. eine Metallfolie oder eine metallisierte Folie. In diesem Fall muss das Druckbild sich auf der Seite befinden, die im Kaschierspalt nicht gegen das Trägermaterial gerichtet ist. In diesem Fall muss die Sensoreinrichtung (7) so umgebaut werden, dass sie gegen die Innenseite der Folie im Abgang des Folientransports im Kaschierwerk (1) gerichtet ist. Das Kaschierwerk kann auch zwei Sensoreinrichtungen (7) aufweisen, die gegen beide Seiten der Rollenbahn (6) gerichtet sind. In diesem Fall kann je nach Anwendungsfall zwischen den beiden Sensoreinrichtungen hin- und hergeschaltet werden.

Mit der erfindungsgemässen Vorrichtung und Verfahren können Vorprodukte für die Herstellung von Faltschachtel, Tuben oder Dosen hergestellt werden. Auch ist es denkbar Bleche oder Glas für Architekturanwendungen, Automobilbau oder für die Herstellung von Haushaltsgeräten mit einem bildhaften Motiv auszustatten.

Selbstverständlich ist die Erfindung nicht auf die zuvor aufgeführten Ausführungsbeispiele beschränkt, und es können Modifikationen innerhalb des Schutzbereichs der folgenden Ansprüche ausgeführt werden. Mit der erfindungsgemäss gefundenen Lösung wurde eine kostengünstige und regelungstechnisch stabile Lösung für eine registergenaue Laminierung von auf Rollenbahnen befindlichen Druckbildern auf bogenförmigen Trägermaterialien gegeben.

Bezeichnerliste
- 1: Laminierwerk
- 2: Kaschierwalze
- 3: Gegendruckwalze
- 4: Rollenabrollung
- 5: Kleberauftragswerk
- 6: Rollenabrollung
- 7: Sensoreinrichtung
- 8: Vorderkantenanschlag
- 9: Vorderkantenanschlagantrieb
- 10: Vorschubmittel (10a obere Rolle, 10b untere Rolle)
- 11: Transportebene
- 12: Transportrichtung
- 13: Kalanderwerk
- 14: Bürstenreinigungsstation
- 15: Anlegertisch
- 16: Entstapelungsvorrichtung (Anleger)
- 17: Bogentrenner
- 18: Stapel
- 19: Unterschuppung / Unterlappung
- 20: Schuppenstrom
- 21: Controller
- 22: Datenleitung
- 23: Vorschubmittel (23a obere Rolle, 23b untere Rolle)
- 24: Linearmotor, Linearantrieb
- 25: Halteelement

## Patentansprüche

1. Vorrichtung zur Bearbeitung eines Laminats, bestehend aus einem bogenförmigen Trägermaterial und einem bahnförmigen Beschichtungsmaterial, wobei das Beschichtungsmaterial ein Druckbild und/oder Textinformationen aufweist,
- mit einer Walzen (2, 3), die einen Kaschierspalt bilden,
- mit einer Ausrichtstation für das bogenförmige Trägermaterial
- mit einer Sensoreinrichtung (7) für das bahnförmige Beschichtungsmaterial, welche geeignet ist Druckmarken und/oder Bildbestandteile auf dem bahnförmigen Beschichtungsmaterial als Informationen zu erfassen,
**dadurch gekennzeichnet, dass**
- die Ausrichtstation ein Vorschubmittel (10) umfasst, welche geeignet ist das bogenförmige Trägermaterial hin zu den Walzen (2, 3) zu bewegen,
- die Ausrichtstation einen Vorderkantenanschlag (8) umfasst, welcher geeignet ist die zu den Walzen (2,3) weisende Kante des bogenförmigen Trägermaterials in Ruhelage formschlüssig anlaufen zu lassen, damit eine Gesamtausrichtung des Trägermaterials stattfindet,
- wobei der Vorderkantenanschlag (8) durch Ansteuerung aus einer in Ruhelage im Wesentlichen horizontal zu einem Untergrund angeordneten Position in eine in Arbeitslage um einen Drehpunkt () hin zu dem Untergrund hin schwenkbare Position bringbar ist,
- wobei ein Rechner (21), welcher die Informationen der Sensoreinrichtung (7) erfasst und den Vorderkantenanschlag (8) aus einer Ruhelage in eine Arbeitslage schwenkbar ansteuert, geeignet um eine Synchronität zwischen dem bahnförmigen Beschichtungsmaterial und dem bogenförmigen Trägermaterial für die gemeinsame Einbringung in den Kaschierspalt zu erreichen.

2. Vorrichtung nach Anspruch 1, **gekennzeichnet durch** eine Klebstoffauftragsvorrichtung (5) zum Applizieren von Klebstoff auf das bahnförmige Beschichtungsmaterial.

3. Vorrichtung nach Anspruch 1 oder 2, **gekennzeichnet durch** eine Entstapelungseinrichtung (16).

4. Vorrichtung nach Anspruch 3, **dadurch gekennzeichnet, dass** die Entstapelungseinrichtung (16) einen Bogentrenner (17) und einen Anlegertisch (15) umfasst.

5. Vorrichtung nach einem der vorigen Ansprüche, **dadurch gekennzeichnet, dass** der Vorderkantenanschlag (8) über einen Antrieb (9) angesteuert durch den Rechner (21) aus der Ruhelage in eine Arbeitslage bringbar ist.

6. Vorrichtung nach einem der Ansprüche 1 bis 5, **dadurch gekennzeichnet, dass** ein weiteres Vorschubmittel (23) zwischen dem Vorschubmittel (10) und dem Kaschierspalt angeordnet ist.

7. Vorrichtung nach Anspruch 6, **dadurch gekennzeichnet, dass** das Vorschubmittel (23) zwei Walzen (23a, 23b) umfasst, wobei zumindest eine der Walzen (23a, 23b)eine elastomere Beschichtung oder eine magnetische Eigenschaft aufweist, geeignet um eine magnetische Kraft auf das bogenförmige Trägermaterial auszuüben.

8. Vorrichtung nach Anspruch 7, **dadurch gekennzeichnet, dass** die magnetische Kraft um- oder abschaltbar ist oder umpolbar ist.

9. Vorrichtung nach einem der vorigen Ansprüche, **dadurch gekennzeichnet**, ein Vorschubmittel (24) als Linearantrieb handelt, geeignet um das bogenförmige Trägermaterial mit Saug- oder Magnetgreifern zu erfassen und hin zum Kaschierspalt zu transportieren.

10. Verfahren zur Bearbeitung eines Laminats, bestehend aus einem bogenförmigen Trägermaterial und einem bahnförmigen Beschichtungsmaterial, wobei das Beschichtungsmaterial ein Druckbild und/oder Textinformationen aufweist, wobei mit einer Sensoreinrichtung (7) Druckmarken und/oder Bildbestandteile auf dem bahnförmigen Beschichtungsmaterial als Informationen erfasst und in Form von Informationen an einen Rechner übermittelt werden, wobei das bahnförmige Beschichtungsmaterial und das bogenförmige Trägermaterial in einem Kaschierspalt zweier Walzen (2,3) verbunden werden, **gekennzeichnet durch** folgende Schritte:
- das bogenförmigen Trägermaterials wird an eine Ausrichtstation bestehend aus einem Vorderkantenanschlag (8) und einem Vorschubmittel (10) herangeführt,
- das bogenförmige Trägermaterial wird an einem Vorderkantenanschlag (8) ausgerichtet
- Absenken und/oder Presskrafterhöhung mindestens eines Vorschubmittels bestehend aus zwei Walzen (10 a, 10b), sodass eine Klemmung des bogenförmigen Trägermaterials zwischen den beiden Walzen (10a, 10b) des Vorschubmittels (10) hergestellt wird,
- der Rechner (21) verarbeitet die Informationen der Sensoreinrichtung (7) derart, dass der Vorderkantenanschlag (8) angesteuert wird, sodass das bogenförmige Trägermaterial mit dem bahnförmigen Beschichtungsmaterials synchron in den Kaschierspalt gelangt, wobei der Vorderkantanschlag (8) aus einer in Ruhelage im Wesentlichen horizontal zu einem Untergrund (31) angeordneten Position in eine in Arbeitslage **durch** einen Antrieb (9), welcher vom Rechner (21) gesteuert wird, um einen Drehpunkt (30) hin zu dem Untergrund hin geschwenkt wird,
- Beschleunigung und Transport des bogenförmigen Trägermaterials mit dem Vorschubmittel (10) bis das bogenförmige Trägermaterial **durch** die Walzen (2, 3) erfasst wird.

11. Verfahren nach Anspruch 10, **dadurch gekennzeichnet, dass** die Informationen der Sensoreinrichtung (7) in dem Rechner (21) unter Berücksichtigung der Parameter Prozessgeschwindigkeit des bogenförmigen Trägermaterial und des bahnförmigen Beschichtungsmaterials, Versetzen des Vorderkantenanschlags aus der Ruhelage in die Arbeitslage und die Geschwindigkeit des Vorschubmittels (10, 23, 24) bestimmt wird, geeignet um ein synchrones Erreichen des bogenförmigen Trägermaterials und des bahnförmigen Beschichtungsmaterials in den Kaschierspalt der Walzen (2,3) zu erhalten.
